(19) Europäisches Patentamt
European Patent Office
Office européen des brevets

(11) **EP 4 060 866 A2**

(12) **EUROPEAN PATENT APPLICATION**

(43) Date of publication:
**21.09.2022 Bulletin 2022/38**

(21) Application number: **22162317.6**

(22) Date of filing: **15.03.2022**

(51) International Patent Classification (IPC):
*H02J 50/12* (2016.01)    *H02J 50/80* (2016.01)
*H02J 13/00* (2006.01)    *H04B 5/00* (2006.01)

(52) Cooperative Patent Classification (CPC):
**H02J 50/80; H02J 13/00026; H02J 50/12;
H04B 5/0031; H04B 5/0037**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.03.2021 US 202163161305 P
14.03.2022 US 202217693519**

(71) Applicant: **Powermat Technologies Ltd.
4970602 Petach Tikva (IL)**

(72) Inventors:
• **SHERMAN, Itay
4970602 Petach Tikva (IL)**
• **NAVEH, Neri
4970602 Petach Tikva (IL)**

(74) Representative: **Maiwald Patent- und
Rechtsanwaltsgesellschaft mbH
Engineering
Elisenhof
Elisenstrasse 3
80335 München (DE)**

(54) **EFFICIENT WIRELESS POWER TRANSFER**

(57)    A power receiver is provided. The power receiver includes a driver, a resonance circuit, and a controller. The resonance circuit includes a coil that receives power transmitted from a power transmitter and a rectifier that implements in-band communication. The controller monitors a condition of the power receiver, adopts a phase shift according to the condition of the power receiver, modulates the in-band communications to the power transmitter based on the phase shift to provide modulated communications, and sends the modulated communications through the coil to the power transmitter.

FIG. 6

EP 4 060 866 A2

**Description**

CROSS REFERENCE TO RELATED APPLICATIONS

This application claims priority from U.S. Provisional Patent Application No. 63/161,305, entitled "EFFICIENT WIRELESS POWER DESIGN," filed on March 15, 2021, which is hereby incorporated by reference as if set forth in full in this application for all purposes.

BACKGROUND

Generally, a conventional wireless power receiver/transmitter design includes a resonance circuit composed of a reception coil and resonant capacitor, a rectification bridge, a communication circuit and some form of a protection circuit. In implementations thereof, the rectification bridge can be a half wave rectifier and a full wave rectifier. The full wave rectifier can be an asynchronous implementation using a four (4) diode topology, a half synchronous implementation using a combination topology of two (2) diodes and two (2) field-effect transistors (FETs), or a fully synchronous implementation using a four (4) FETs topology. The rectification bridge can also include an output capacitor that stabilizes the output voltage. Note that most commercial implementations of conventional wireless power receiver designs use fully synchronous implementations.

Further, the communication circuit for the conventional wireless power receiver/transmitter design is based on so called "in band" load modulation and includes a FET or two that switch connection to a resistor or capacitor. The communication circuit can interface to the resonance circuit or be connected after the rectification bridge in parallel to the load. Typically, a fixed load switch for communication with no relation to an actual load of the conventional wireless power receiver/transmitter design is provided. An effect of a switched communication load on a current and voltage of a transmitter main circuit will differ based on a level of load on a receiver, which causes communication detection problems in the transmitter when specific load conditions on the receiver occur. Accordingly, a protection circuit can be implemented that uses a switched minimal load (i.e., implemented as an additional FET that connects a resistive load to N output of the rectification bridge creating a minimal load in cases were the actual load of the system is disconnected or drops below a certain level). Alternatively, conventional wireless power receiver/transmitter designs can also use switched capacitors that are causing the resonance circuit to 'detune', where the capacitors are switched using an additional FET or two FETs. These mitigating designs are inefficient.

Thus, there is a need for an efficient wireless power design.

SUMMARY

According to one or more embodiments, a power receiver is provided. The power receiver includes a driver, a resonance circuit, and a controller. The resonance circuit includes a coil that receives power transmitted from a power transmitter and a rectifier that implements in-band communication. The controller monitors a condition of the power receiver, adopts a phase shift according to the condition of the power receiver, modulates the in-band communications to the power transmitter based on the phase shift to provide modulated communications, and sends the modulated communications through the coil to the power transmitter.

According to one or more embodiments, a power receiver is provided. The power receiver includes a driver, a resonance circuit, and a controller. The resonance circuit includes at least a coil configured to receive power transmitted from a power transmitter and a rectifier. The controller implements signal learning by being configured to monitor a signal derived from the resonance circuit, determine a timing of the signal, and operate the rectifier at the timing.

According to one or more embodiments, the above power receivers can be implemented as a method, an apparatus, system, and/or a computer program product.

Additional features and advantages are realized through the techniques of the present disclosure. Other embodiments and aspects of the disclosure are described in detail herein. For a better understanding of the disclosure with the advantages and the features, refer to the description and to the drawings.

BRIEF DESCRIPTION OF THE DRAWINGS

The subject matter is particularly pointed out and distinctly claimed in the claims at the conclusion of the specification. The forgoing and other features, and advantages of the embodiments herein are apparent from the following detailed description taken in conjunction with the accompanying drawings in which:

FIG. 1 depicts a diagram of a system in accordance with one or more embodiments;
FIG. 2 depicts a method in accordance with one or more embodiments;

FIG. 3 depicts a method in accordance with one or more embodiments;
FIG. 4 depicts a graph in accordance with one or more embodiments;
FIG. 5 depicts a graph in accordance with one or more embodiments;
FIG. 6 depicts a system in accordance with one or more embodiments; and
FIG. 7 depicts a system in accordance with one or more embodiments.

DETAILED DESCRIPTION

Embodiments disclosed herein may include apparatuses, systems, methods, and/or computer program products for an efficient wireless power design (e.g., a wireless power system) that wirelessly transfers power between a transmitter and a receiver.

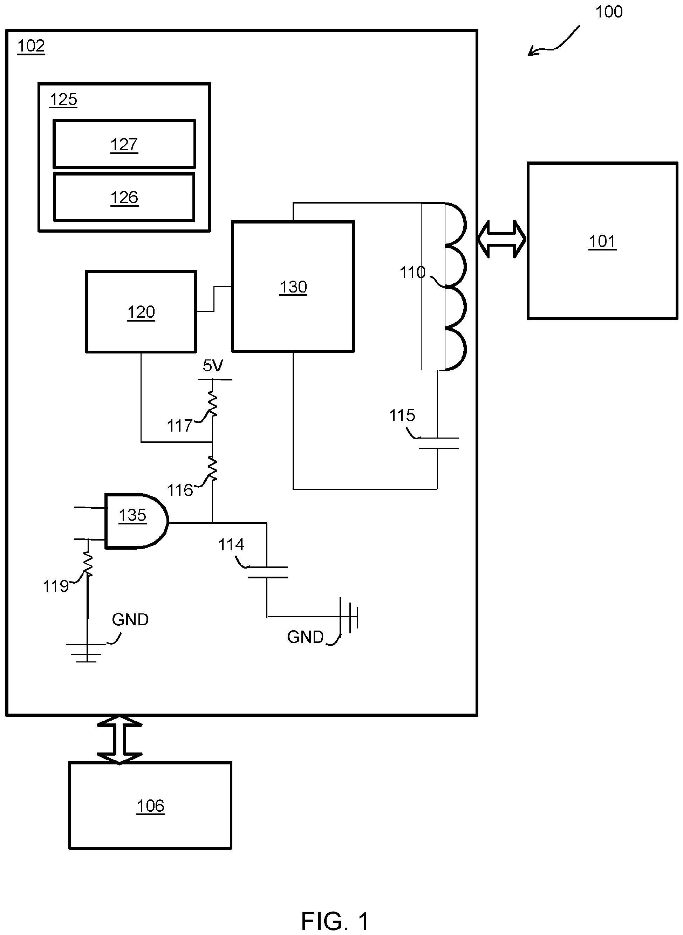

FIG. 1 shows a system 100 (e.g., the wireless power system) in accordance with one or more embodiments. The system 100 comprises wireless power devices101 and 102. For ease of explanation, and without particularly limiting the functions of the wireless power devices 101 and 102, these devices 101 and 102 are referred herein, such as a power transmitter 101 or Tx 101 and a power receiver 102 or Rx 102, respectively.

The Tx 101 can be any device that can generate electromagnetic energy from, for example, an AC power source to a space around the Tx 101 that is used to provide power to the Rx 102 and/or one or more devices 106. The Rx 102 is any device that can receive, use, and/or store the electromagnetic energy when present in the space around the Tx 101. Note that the Rx 102 can have a similar or the same component structure as the Tx 101, and vice versa (e.g., both of the wireless power devices 101 and 102 can include similar electrical and provide similar functionality based on a particular operation of the system 100).

The Rx 102 includes circuitry for receiving, providing, and/or storing the electromagnetic energy, which can be further provided to a load. The load can be a single instance or any combination of electronic components, such as the one or more one or more battery packs, as well as other circuit components (e.g., resistors, capacitors, etc.). By way of example, the Rx 102 can be configured to provide the electromagnetic energy to the one or more devices 106.

As shown in FIG. 1, the Rx 102 includes circuitry for receiving and transmitting the electromagnetic energy (i.e., received power). The circuitry of the Rx 102 may include a receiver coil 110; capacitors 114 and 115 (e.g., for storing the induced power); resistors 116, 117, and 119; a driver 120; a controller 125, which further includes an input/output (I/O) module 126 and firmware 127; a rectifier 130; and a gate 135 (optional), as well as one or more grounds GND. Note that, while the gate 135 is shown as an AND gate if FIG. 1, other gates are contemplated. Note that multiple control lines and detection lines (e.g., sensing circuits, circuitry, etc.) connects the controller 125 to components of the Rx 102; however, for ease of display, these control lines and detection lines are omitted. The Rx 102 can also include feedback circuitry to communicate with the Tx 101.

According to one or more embodiment, the Rx 102 includes an inductor implemented as the receiver coil 110 that is driven by the driver 120 and the rectifier 130, which is controlled by the controller 125 (e.g., the controller 125 is providing the control signals for one or more FETs (e.g., four FETs) of the rectifier 130). The receiver coil 110 of the Rx 102 (and a coil of the Tx 101) can include standard electrical wiring copper wires folded and/or Litz wires. Thus, the receiver coil 110 in the Rx 102 can be used to inductively couple to the coil of the Tx 101 and is connected to the resonant capacitor 115 (e.g., a serial resonance capacitor). For example, the receiver coil 110 and the resonant capacitor 115 provide an LC circuit for generating an inductive current in accordance with operations of the rectifier 130 and the controller 125 to support power transmissions (e.g., interact with a magnetic field of the Tx 101 to wirelessly obtain induced power that charges the one or more devices 106). Further, the rectifier 130, the receiver coil 110, and/or the resonant capacitor 115 can be considered a resonance circuit of the Rx 102.

The driver 120 can be based on commercially available electronic device designed to operate and trigger actions of the rectifier 130 in a precise way, based on signals of the controller 125. The rectifier 130 can be based on commercially available half-wave rectification; full-wave rectification; FET based full-wave rectification; and any combination thereof, or the like. For example, the rectifier 130 can be any rectifier using one or more components, such as four diodes (e.g., asynchronous rectifier), two didoes and two FETs (half synchronous), four FETs (synchronous), and/or two capacitors and two switches, that are controlled by either a dedicated logic circuit or the controller 125 and driven by the driver 120. For instance, the rectifier 130 can be a four diode bridge with or without four FETs (e.g., the that are switched to achieve a desired operation mode). In an example, the controller 125 creates control signals to control one or more four FETs and tracks voltages of the one or more FETs. In this way, the Rx 102 can operate every power FET as a diode (i.e., diode only mode). The Rx 102 can use a fully synchronous rectifier using the four FETs and eliminate a need for any additional circuits for minimal load, communication, or detune.

According to one or more embodiments, the controller 125 can include a sensing circuits, circuitry, and/or software, for detecting/sensing voltage, current, or other features of the Rx 102. The controller 125 can control and/or communicate any part of the Rx 102 to provide modulation as needed for power transfer. The controller 125 can include software therein (e.g., the firmware 127) that logically provides one or more of a FIR equalizer, an analyzer of in-band communication data, a selector for selecting a ping, a coupler for dynamically determining a coupling factor, a regulator for dynamically determining an operating frequency, etc. In this regard, the controller 125 can utilize a system memory and a processor, as described herein, to store and execute the firmware 127. According to one or more embodiments, the controller 125 can be utilized to perform computations required by the sensing circuit, circuitry, and/or software or any of the circuitry therein. For example, the controller 125 can monitor voltage of the resonance circuit (e.g., capacitor voltage of the capacitor 115 and inductor voltage of the coil 110) as well as AC currents on the resonance circuit (e.g., by measuring of voltage of resistive element, via capacitor voltage derivation, current transformer, etc.).

According to one or more embodiments, the controller 125 can utilize the I/O module 126 as an interface to transmit and/or receive information and instructions between the controller 125 and elements of the Rx 102 (e.g., such as the driver 120, the rectifier 130, and/or any wiring junction or resistor). For instance, the controller 125 can include a sensing circuit, circuitry, unit, and/or software for sensing voltage and/or current of the Rx 102 (e.g., the controller 125 monitors a resonance circuit voltage of the Rx 102). According to one or more embodiments, the controller 125 can sense, through the I/O module 126 one or more currents or voltages, such as a AC input voltage (Vin) and a AC resonance circuit voltage (Vac). According to one or more embodiments, the controller 125 can activate, through the I/O module 126, one or more switches to change the resonance frequency (as the Rx 102 and/or the Tx 101 can include multiple switches for multiple frequencies). According to one or more embodiments, the controller 125 can may utilize the firmware 127 as a mechanism to operate and control operations of the Rx 102. In this regard, the controller 125 can be a computerized component or a plurality of computerized components adapted to perform methods such as described herein.

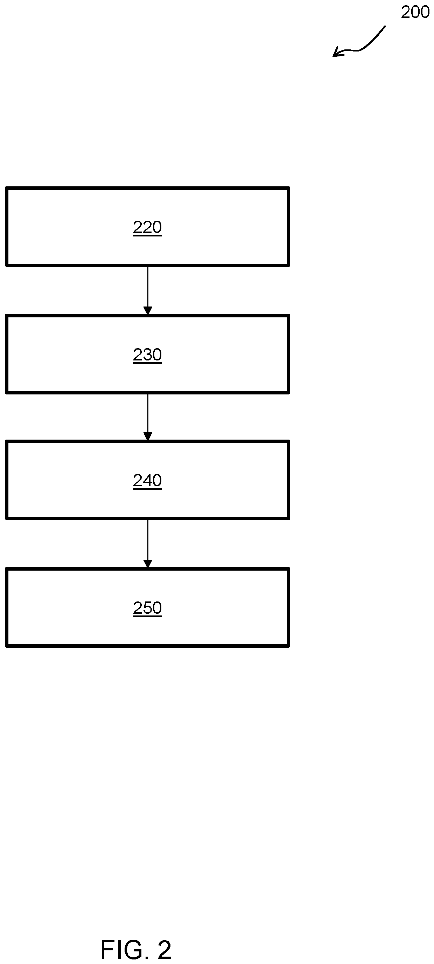

FIG. 2 depicts a method 200 in accordance with one or more embodiments. The method 200 can be embodied by the firmware 127 and executed by the controller 125. Generally, the method 200 is an implementation of determining/learning phase of the system 100 (i.e., signal learning).

As shown by the method 200, the Rx 102 generally (and the controller 125 specifically) can control the one or more FETs (e.g., four FETs) of the rectifier 130 to operate in one or more modes to achieve improved functionality over the conventional wireless power receiver/transmitter design. The method 200 begins when, at block 220, the Rx 102 initiates a diode only mode for each FET. For example, at initial stage, the controller 125 does not enable any of FETs of the rectifier 130. Operation of the rectifier 130 (i.e., the diode only mode) can be based on inherent diodes of metal-oxide-semiconductor (MOS) FETs.

Then, at block 230, the Rx 102 determines or monitors a signal, which can be different (include different parameters) per transmitter and within same transmitter. The controller 125 can monitor, as the signal, resonance circuit voltage of the Rx 102. Further, the controller 125 can monitor, as the signal, a switching pattern of the resonance circuit of the Rx 102.

At block 240, the Rx 102 determines and/or learns a timing of the signal. The controller 125 can 'learn' a frequency and phase of a power carrier, as well as zero current switching points. Determining and/or learning can including storing values of the timing in a memory of the controller 125.

At block 250, the Rx 102 programs the one or more FETs of the rectifier 130 to operate at the timing of the signal. The controller 125 can then set the FETs of the rectifier 130 to toggle according to a pulse width modulation (PWM) signal that matches the determined/learned timing (i.e., the switching pattern). In this regard, the Rx 102 can control the timing, such as by using the rectifier 130 (to do more than rectification).

One or more technical effects, advantages, and benefits of the method 200 include eliminating an ancillary load (i.e., a standard practice in-band communication) by controlling timing differently (need a synchronous rectifier that is not reliant of a determining/learning phase and can be based on zero crossing, while maintaining synchronization signal). Additional technical effects, advantages, and benefits of the operations of the Rx 102 include eliminating connecting a minimum load as further described herein.

As indicated herein, by controlling timing differently, the Rx 102 operates in one or more modes to achieve improved functionality. According to a first mode of the one or more modes of the Rx 102, the controller 125 of the Rx 102 controls a switching of the one or more FETs (e.g., four FETs) of the rectifier 130 to be synchronous with a current zero crossing of a resonance circuit of the Rx 102, imitating switching behavior as for diode implementation (i.e., diode only mode). Note that the Rx 102 can operate in the first mode when the system 100 operations do not require modulated communication signals or protections to be activated. Further, a switching point can be an optimal switching point providing maximum power to a rectified side.

According to a second mode of the one or more modes of the Rx 102 (e.g., a switching current mode), a switching current on the resonance circuit of the Rx 102 is converted to positive only current to a rectifier capacitor and load. When protection of the system 100 is required (e.g., typically after load dump, when rectifier voltage increases above a certain threshold), the one or more FETs (e.g., four FETs) of the rectifier 130 are operated in a time shift pattern using a same waveform as for the first mode, but with some phase shift.

According to a third mode of the one or more modes of the Rx 102 (e.g., a switching point mode), a switching point of the one or more FETs (e.g., four FETs) of the rectifier 130 is performed when a current is no longer zero, such as negative. In this regard, the rectifier capacitor is charged during part of the cycle and discharged on another part of the cycle. Note that the larger the phase shift, than the larger the discharge part of the cycle.

According to a fourth mode of the one or more modes of the Rx 102 (e.g., a charge transfer mode), an amount of charge transferred to a capacitor during a power carrier cycle is decreased. Given a defined system load, modification of a phase shift can enable to achieve net negative charge to the capacitor per cycle and allow reduction of rectified voltage.

Note that once voltage reaches a desired operation window, the phase shift may be reduced or canceled.

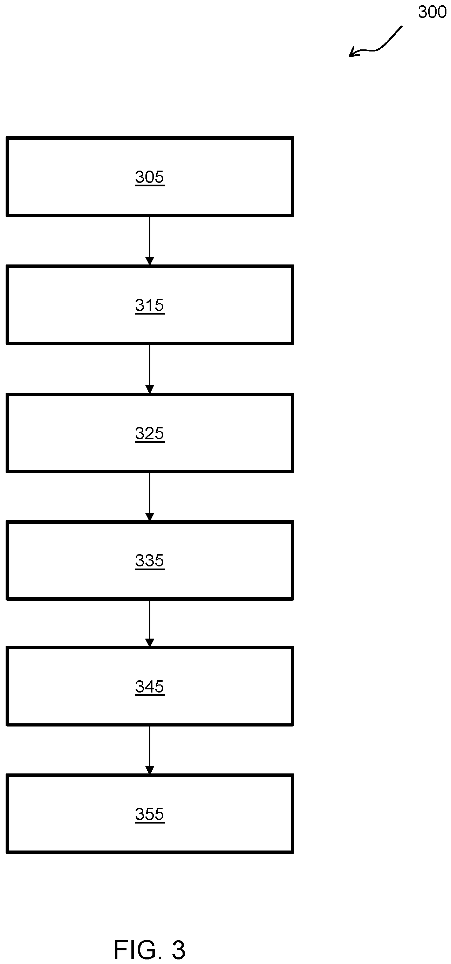

FIG. 3 depicts a method 300 in accordance with one or more embodiments. The method 300 can be embodied by the firmware 127 and executed by the controller 125. Generally, the method 300 is an implementation of in-band communication. The method 300 begins when, at block 305, the controller 125 of the Rx 102 monitors conditions of the Rx 102, such as load currents. The controller 125 can also monitor the resonance circuit voltage of the Rx 102. The condition can be different (have different parameters) per power transmitter.

At block 315, the controller 125 of the Rx 102 adopts a phase shift accordingly. Adopting the phase shift can including storing values of the conditions and/or the selected phase shift in the memory of the controller 125. The phase shift is used for a modulated communicated signal accordingly. One or more technical effects, advantages, and benefits of the adopting the phase shift from monitored load currents include decreasing fluctuations of a rectified voltage Vrect during communications and ensuring enough modulation depth in the Tx 101 for various load conditions without the need for special modulators per load condition.

At block 325, the Rx 102 sets a shift (the phase shift adopted in block 315) on an FET switching pattern to (in effect) create a load modification and enable communication. An amount of the phase shift for modulated bits can be dynamically set to produce desired modulation on a main resonance circuit of the Tx 101. The phase shift can also be a function of an active load (e.g., the one or more devices 106) of the Rx 102.

At block 235, the Rx 102 sends a modulated signal while the one or more FETs (e.g., four FETs) of the rectifier 130 are operated in a shifted phase pattern (while the shift is set on the FET switching pattern). In this regard, the controller 125 is providing the control signals for the one or more FETs (e.g., four FETs) of the rectifier 130. At block 245, the Rx 102 completes the transfer of the modulated signal. At block 355, the Rx 102 removes the shift on the FET switching pattern (when no modulated signal is to be sent, there is no phase shift).

According to one or more embodiments, to continue guaranteeing a synchronization to zero crossing point over time, the FETs of the rectifier 130 can be operated with a dead time period between FETs switches. During the dead time period, none of the FETs of the rectifier 130 are enabled, and the rectifier 130 operates the FETs as body diodes (i.e., the Rx 102 can operate every power FET as a diode or in diode only mode). The dead time is set to include a predicated zero current switching. The controller 125 can then sense an exact zero current crossing point and adopt the PWM signal dynamically to track a power carrier true zero current switch point, thereby achieving maximum efficiency of the rectifier 130.

According to one or more embodiments, when operating using a shifted PWM pattern, the dead time and continues zero cross point monitoring approach are not used. The PWM continues operating according to phase and frequency, as determined/learned during the first more or a first operation as described herein. Note that the implication is that any frequency difference or shifts between a transmitter power signal and an estimated PWM receiver signal contributes to increasing phase shift. To permit a rectifier PWM control signal resynchronization, a shifted phase operation is activated for limited time periods with some minimal number of normal operation cycles to enable resynchronization. Following the disabling of shifted phase operation, the controller 125 returns to an initial state and relearns (re-determines) any correct zero crossing frequency and phase, and then reverts to the normal PWM operation. Note that a maximum amount of continues shifted phase operation that should be used would depends on an expected frequency drift of a transmitter power carrier, an accuracy of a receiver controller estimation of a transmitter carrier frequency, and/or a resolution of setting for the rectifier FET PWM signals.

According to one or more embodiments, when applying a limiting factor for a time duration is a PWM signal resolution, dithering techniques on a PWM signal may be used to achieve longer operation time in shifted phase mode. Yet, applying the limiting factor may also limit an ability to use the methods herein for communication. Though, for some for modulation schemes that include bi-phase modulation, applying the limiting factor is not a concern (as the period of time for a modulated signal is never longer than duration of a single bit followed by at least half bit of non-modulated signal). Accordingly, one or more embodiments can guarantee an overall phase shift due to a PWM resolution and transmitter clock drifts during a single bit period are not too large (e.g., a reference value of 30 degrees can be used). As an example, if a carrier frequency of 125 KHz is used with Qi bit length of 500 $\mu$sec, a 30 degree shift would translate to 2/3 $\mu$sec. The equivalent frequency drift translates to 162.5 Hz.

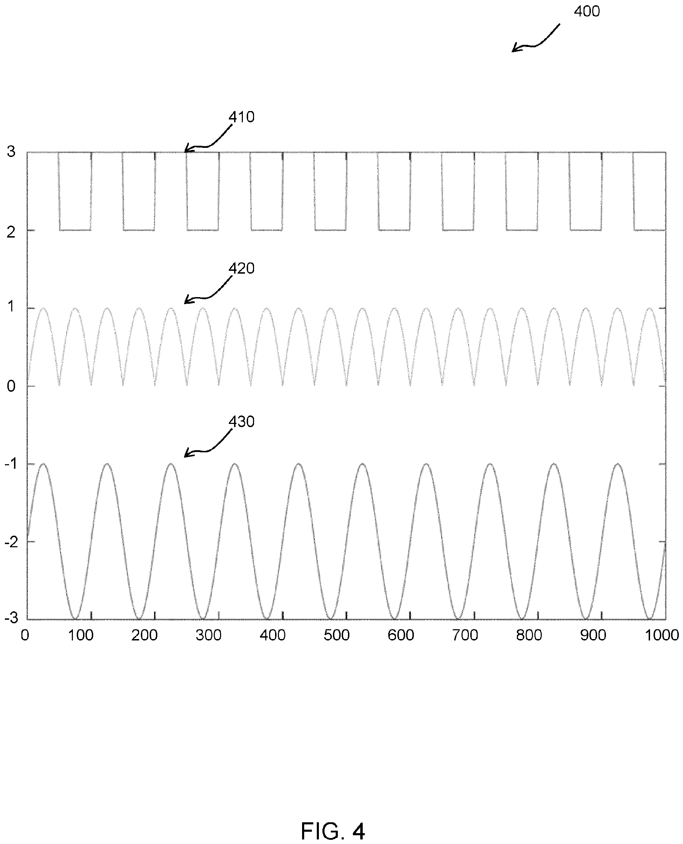

FIG. 4 depicts a graph 400 in accordance with one or more embodiments. The graph 400 depicts wave forms of signals for a first operation (a normal mode with dead time not shown). The horizontal axis of the graph 400 is time. The vertical axis of the graph 400 is qualitative only to illustrate the wave forms. A signal 410 represents an FET switching pattern synchronized to a zero cross points of current. A signal 420 is a current from a rectifier bridge into a rectifier capacitor. A signal 430 is a receiver resonance circuit current.

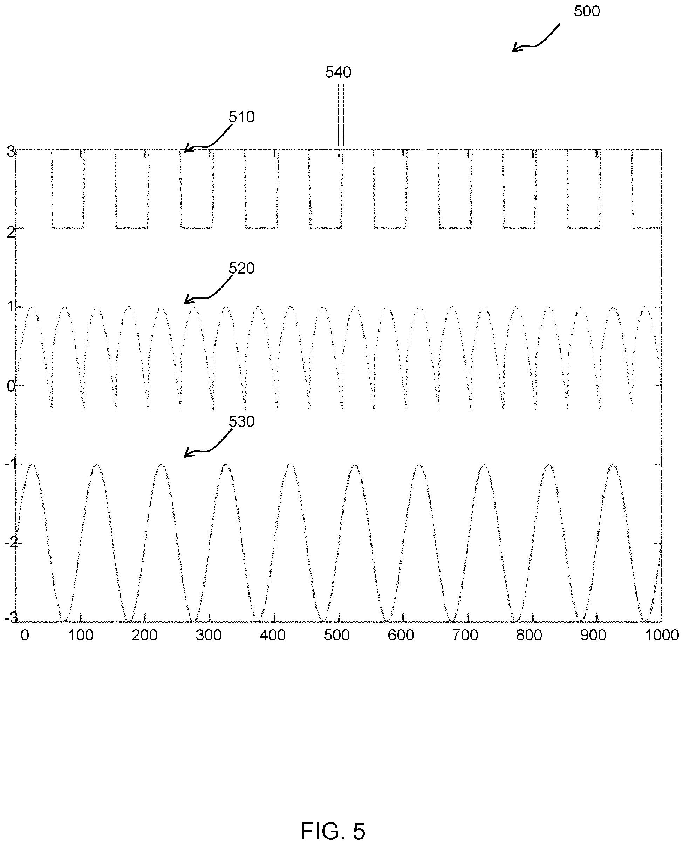

FIG. 5 depicts a graph 500 in accordance with one or more embodiments. The graph 500 depicts wave forms for a shifted operation (e.g., a phase shifted operation). The horizontal axis of the graph 500 is time. The vertical axis of the graph 500 is qualitative only to illustrate the wave forms. A signal 510 represents an FET switching pattern synchronized to a zero cross points of current. A signal 520 is a current from a rectifier bridge into a rectifier capacitor. A signal 530 is a receiver resonance circuit current. A shift 540 shown in the graph 500, by way of example, is a phase shift of 18 degrees. As depicted by the signal 520 of the graph 500, the current to the rectifier capacitor includes also a negative current (i.e., discharge), and an over-all charge flowing to capacitor per cycle is reduced (compared to the first operation of the graph 400 of FIG. 4). One or more technical effects, advantages, and benefits of the Rx 102 use schemes herein for control of the rectifier 130, the Rx 102 can omit both communication and protection dedicated circuits, while provided a more stable and cost effective solution.

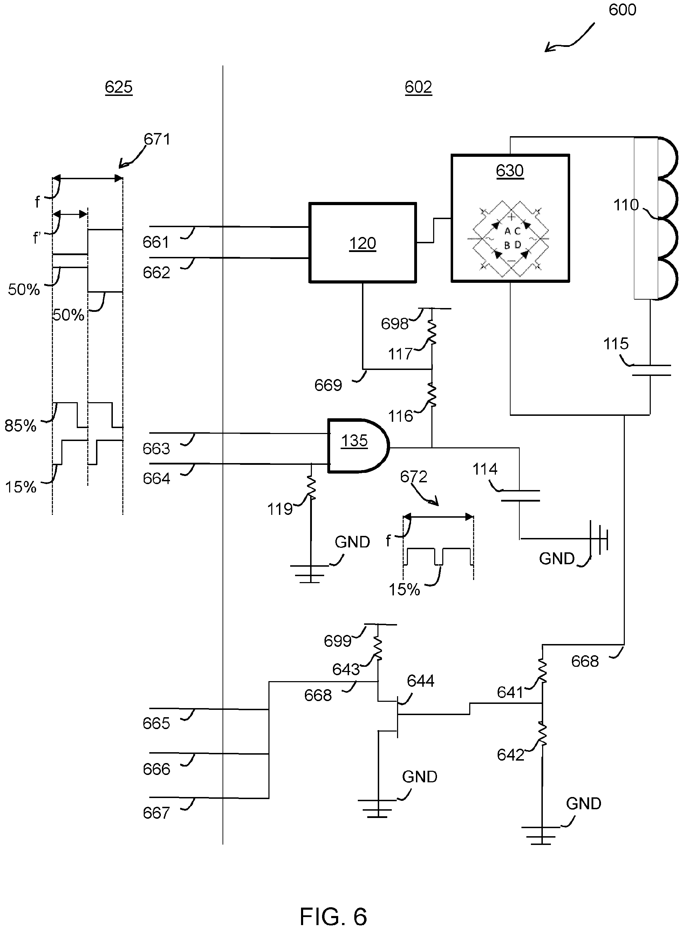

FIG. 6 depicts a system 600 in accordance with one or more embodiments. The system 600 depicts a receiver implementation diagram with respect to the methods and the modes discussed herein. Items and components of the system 100 of FIG. 1 are reused with respect to the system 600 of FIG. 6 for ease of explanation and brevity. Further items and components of the system 600 include a power receiver (Rx) 602; a controller 625; a rectifier 630 including rectifier FETs A-D; resistors 641, 642, and 643; a transistor 644 (e.g., and FET); signal lines 661, 662, 663, 664, 665, 666, 667, 668, and 669; and timing graphs 671 and 672. According to one or more embodiments, and while not being limited thereto, the resistors 117, 642, and 644 can be 1k ohm; the resistors 116 and 641 can be .5 kohm; the capacitor 115 can be 1 ηF; and/or the voltage at points 698 and 699 can be 5 volts and 3 volts, respectively.

The controller 625 outputs signals 661 and 662 (e.g., considered PWM signals PA7 and PB8) to control the rectifier FETs A-D. In this regard, the driver 120 provides a drive to the FETs A-D based on receiving the signals 661 and 662 provided by the controller 625.

Further, the controller 625 senses a resonance circuit voltage. The controller 625 utilizes the resonance circuit voltage as a synchronization or sensing signal (i.e., the signal 668). For instance, the sensing signal 668 can be provided as signals 665, 666, and 667 to the controller 625 (i.e., connected to pins PB4, PA6 and PA12 of the controller 625) to control different functions thereof. The signals 665 and 667 operate to reset and resynchronize timers of the controller 625, thereby creating a PWM and enable signals. The signals 666 is used as input to a timer that 'learns' a frequency and phase of zero crossing, as described herein. The resistors 641, 642, and 643 and the transistor 644 connected between a sensing point and the controller 625 digitize the signal 668. The resistors 641, 642, and 643 and the transistor 644, further, set the signal 668 to voltage levels acceptable by the controller 625.

The controller 625 also controls a signal 669 (e.g., an enable signal) to the driver 120. In this way, disabling the driver 120 enables the controller 625 to turn the rectifier 630 to the diode only mode and to sense of zero cross point and resynchronize, as described herein.

According to one or more embodiments, with respect to one or more specific implementations of the controller 625, the signal 669 can be created based on using the signals 663 and 664 (e.g., two output signals from to pins PB0 and PB1) going to the gate 135 (e.g., an external AND gate; note that in another implementation, the signal 669 can be applied directly from the controller 135).

According to one or more embodiments, the timing graphs 671 and 672 shows waveforms and internal controller timer settings to create relevant output signals 661-664 and enable signal 669. Note the timing graphs 671 and 672 show a frequency f, with f being half of the frequency f. The frequency capture can use a moving average according to Equation 1.

$$A_v = \left(A_v/(N)\right) * (N-1) + NewVal \qquad \text{Equation 1}$$

According to one or more embodiments, the frequency capture may not be performed during communications. Further, the controller 625 can filter wrong measurements.

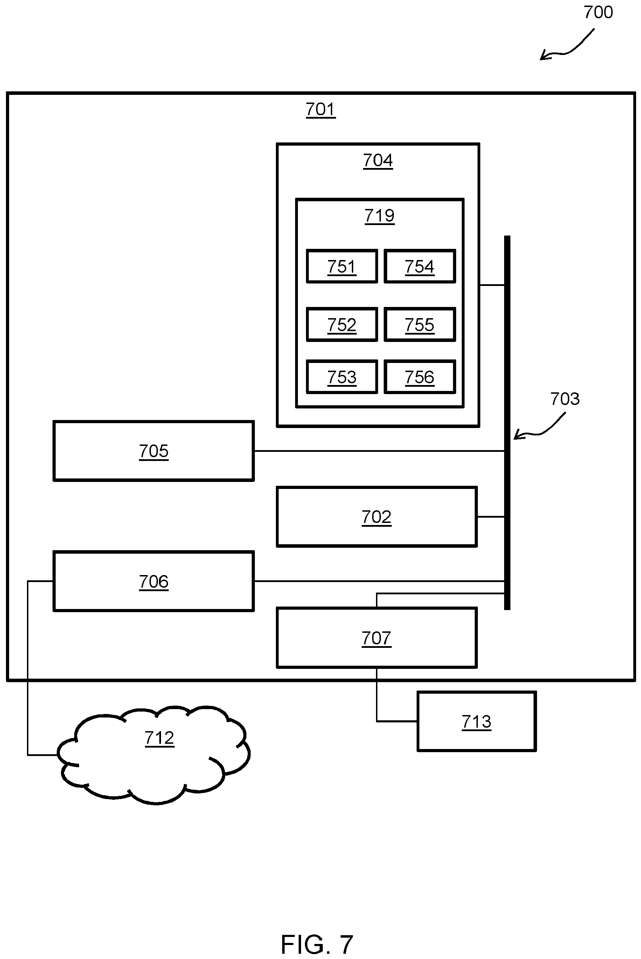

FIG. 7 depicts a system 700 in accordance with one or more embodiments. The system 700 has a device 701 (e.g., the Rx 102 and/or the Tx 101 of the system 100 of FIG. 1) with one or more central processing units (CPU(s)), which are collectively or generically referred to as processor(s) 702 (e.g., the controller 125 of FIG. 1). The processors 702, also referred to as processing circuits, are coupled via a system bus 703 to system memory 704 and various other components. The system memory 704 can include a read only memory (ROM), a random access memory (RAM), internal or external Flash memory, embedded static-RAM (SRAM), and/or any other volatile or non-volatile memory. For example, the ROM is coupled to the system bus and may include a basic input/output system (BIOS), which controls certain basic functions of the device 701, and the RAM is read-write memory coupled to the system bus 703 for use by the processors 702.

FIG. 7 further depicts an I/O adapter 705, a communications adapter 706, and an adapter 707 coupled to the system bus 703. The I/O adapter 705 may be a small computer system interface (SCSI) adapter that communicates with a drive and/or any other similar component. The communications adapter 706 interconnects the system bus 703 with a network 712, which may be an outside network (power or otherwise), enabling the device 701 to communicate data and/or transfer power with other such devices (e.g., such as the Tx 101 connecting to the Rx 102). A display 713 (e.g., screen, a display monitor) is connected to the system bus 703 by the adapter 707, which may include a graphics controller to improve the performance of graphics intensive applications and a video controller. Additional input/output devices cab connected to the system bus 703 via the adapter 707, such as a mouse, a touch screen, a keypad, a camera, a speaker, etc.

In one embodiment, the adapters 705, 706, and 707 may be connected to one or more I/O buses that are connected to the system bus 703 via an intermediate bus bridge. Suitable I/O buses for connecting peripheral devices such as hard disk controllers, network adapters, and graphics adapters typically include common protocols, such as the Peripheral Component Interconnect (PCI).

The system memory 704 is an example of a computer readable storage medium, where software 719 can be stored as instructions for execution by the processor 702 to cause the device 701 to operate, such as is described herein with reference to FIGS. 1-6. In connection with FIG. 1, the software 719 can be representative of firmware 127 for the Tx 101, such that the memory 704 and the processor 702 (e.g., of the controller 125) logically provide a FIR equalizer 751, an analyzer 752 of in-band communication data, a selector 753 for selecting a ping, a coupler 754 for dynamically determining a coupling factor, a regulator 755 for dynamically determining an operating frequency, a mode determination unit 756 for selecting and implementing one or more modes, etc.

According to one or more embodiments, a power receiver is provided. The power receiver includes a driver, a resonance circuit, and a controller. The resonance circuit includes a coil that receives power transmitted from a power transmitter and a rectifier that implements in-band communication. The controller monitors a condition of the power receiver, adopts a phase shift according to the condition of the power receiver, modulates the in-band communications to the power transmitter based on the phase shift to provide modulated communications, and sends the modulated communications through the coil to the power transmitter.

According to one or more embodiments or any of the power receiver embodiments herein, the controller can be configured to set a shift on a FET switching pattern based on the phase shift to create a load modification.

According to one or more embodiments or any of the power receiver embodiments herein, an amount of the phase shift for bits of the modulated communications can be dynamically set to produce a modulation on the resonance circuit.

According to one or more embodiments or any of the power receiver embodiments herein, the phase shift can be a function of an active load of the power receiver.

According to one or more embodiments or any of the power receiver embodiments herein, the controller can be configured to send the modulated communications while one or more FETs of the rectifier are operated in the shifted phase pattern.

According to one or more embodiments or any of the power receiver embodiments herein, the controller can be configured to complete a transfer of the modulated communications to the power transmitter and remove a shift on a FET switching pattern when the transfer is complete.

According to one or more embodiments or any of the power receiver embodiments herein, the controller can modulate the in-band communications to the power transmitter based on the phase shift to decrease fluctuations of a rectified voltage during communications and.

According to one or more embodiments or any of the power receiver embodiments herein, the condition can include different parameters per power transmitter.

According to one or more embodiments or any of the power receiver embodiments herein, the condition can include load currents.

According to one or more embodiments or any of the power receiver embodiments herein, the condition can include a resonance circuit voltage of the resonance circuit.

According to one or more embodiments, a power receiver is provided. The power receiver includes a driver, a resonance circuit, and a controller. The resonance circuit includes at least a coil configured to receive power transmitted from a power transmitter and a rectifier. The controller implements signal learning by being configured to monitor a signal derived from the resonance circuit, determine a timing of the signal, and operate the rectifier at the timing.

According to one or more embodiments or any of the power receiver embodiments herein, the controller can set one or more field-effect transistors (FETs) of the rectifier to toggle according to a pulse width modulation (PWM) signal that matches the timing of the signal.

According to one or more embodiments or any of the power receiver embodiments herein, the signal can include different parameters per power transmitter.

According to one or more embodiments or any of the power receiver embodiments herein, the signal can include a resonance circuit voltage.

According to one or more embodiments or any of the power receiver embodiments herein, the signal can include a switching pattern of the resonance circuit.

According to one or more embodiments or any of the power receiver embodiments herein, the controller can initiate a diode only mode for each FET of the rectifier while monitoring the signal.

According to one or more embodiments or any of the power receiver embodiments herein, the timing of the signal can include a frequency and phase of a power carrier and zero current switching points.

According to one or more embodiments or any of the power receiver embodiments herein, operating the rectifier at the timing can eliminate an ancillary load of the power receiver.

According to one or more embodiments or any of the power receiver embodiments herein, operating the rectifier at the timing can eliminate communication and protection dedicated circuits.

According to one or more embodiments or any of the power receiver embodiments herein, the controller can operate the power receiver in one or more modes including a diode only mode, a switching current mode, a switching point mode, and a charge transfer mode.

As indicated herein, embodiments disclosed herein may include apparatuses, systems, methods, and/or computer program products at any possible technical detail level of integration. The computer program product may include a computer readable storage medium (or media) having computer readable program instructions thereon for causing a controller to carry out aspects of the present invention.

The computer readable storage medium can be a tangible device that can retain and store computer readable program instructions. The computer readable storage medium may be, for example, but is not limited to, an electronic storage device, a magnetic storage device, an optical storage device, an electromagnetic storage device, a semiconductor storage device, or any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

The computer readable program instructions described herein can be communicated and/or downloaded to respective controllers from an apparatus, device, computer, or external storage via a connection, for example, in-band communication. Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

The flowchart and block diagrams in the drawings illustrate the architecture, functionality, and operation of possible implementations of apparatuses, systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the flowchart and block diagrams in the drawings. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used herein, specify the presence of stated features, integers, steps, operations, elements, and/or components, but do not preclude the presence or addition of one more other features, integers, steps, operations, element components, and/or groups thereof.

The descriptions of the various embodiments herein have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

**Claims**

1. A power receiver comprising:

   a driver;
   a resonance circuit comprising at least a coil configured to receive power transmitted from a power transmitter and a rectifier; and
   a controller implementing in-band communication by being configured to:

      monitor a condition of the power receiver;
      adopts a phase shift according to the condition of the power receiver;
      modulate the in-band communications to the power transmitter based on the phase shift to provide modulated communications; and
      send the modulated communications through the coil to the power transmitter.

2. The power receiver of claim 1, wherein the controller is configured to set a shift on a field-effect transistor (FET) switching pattern based on the phase shift to create a load modification.

3. The power receiver of claim 1 or 2, wherein an amount of the phase shift for bits of the modulated communications are dynamically set to produce a modulation on the resonance circuit.

4. The power receiver of any of the preceding claims, wherein the phase shift is a function of an active load of the power receiver.

5. The power receiver of any of the preceding claims, wherein the controller is configured to send the modulated communications while one or more field-effect transistors (FETs) of the rectifier are operated in the shifted phase pattern.

6. The power receiver of any of the preceding claims, wherein the controller is configured to complete a transfer of the modulated communications to the power transmitter and remove a shift on a FET switching pattern when the transfer is complete.

7. The power receiver of any of the preceding claims, wherein the controller modulates the in-band communications to the power transmitter based on the phase shift to decrease fluctuations of a rectified voltage during communications.

8. The power receiver of any of the preceding claims, wherein the condition comprises different parameters per power transmitter.

9. The power receiver of any of the preceding claims, wherein the condition comprises load currents.

10. The power receiver of any of the preceding claims, wherein the condition comprise a resonance circuit voltage of the resonance circuit.

11. A power receiver comprising:

    a driver;
    a resonance circuit comprising at least a coil configured to receive power transmitted from a power transmitter and a rectifier; and
    a controller implementing signal learning by being configured to:

       monitor a signal derived from the resonance circuit;
       determine a timing of the signal; and
       operate the rectifier at the timing.

12. The power receiver of claim 11, wherein the controller sets one or more field-effect transistors (FETs) of the rectifier to toggle according to a pulse width modulation (PWM) signal that matches the timing of the signal.

**13.** The power receiver of claim 11 or 12, wherein the signal comprises different parameters per power transmitter.

**14.** The power receiver of any of claims 11 to 13, wherein the signal comprises a resonance circuit voltage.

**15.** The power receiver of any of claims 11 to 14, wherein the signal comprises a switching pattern of the resonance circuit.

**16.** The power receiver of any of claims 11 to 15, wherein the controller initiates a diode only mode for each field-effect transistor (FET) of the rectifier while monitoring the signal.

**17.** The power receiver of any of claims 11 to 16, wherein the timing of the signal comprises a frequency and phase of a power carrier and zero current switching points.

**18.** The power receiver of any of claims 11 to 17, wherein operating the rectifier at the timing eliminates an ancillary load of the power receiver.

**19.** The power receiver of any of claims 11 to 18, wherein operating the rectifier at the timing eliminates communication and protection dedicated circuits.

**20.** The power receiver of any of claims 11 to 19, wherein the controller operates the power receiver in one or more modes comprising a diode only mode, a switching current mode, a switching point mode, and a charge transfer mode.

FIG. 1

200

FIG. 2

300

FIG. 3

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63161305